# EUROPEAN PATENT SPECIFICATION

(11) **EP 4 024 024 B1**
(45) Date of publication and mention of the grant of the patent: **07.06.2023**
(21) Application number: 21870567.1
(22) Date of filing: 03.08.2021
(51) Int. Cl.: G01M 7/02, G01M 7/04, B04B 5/10

(54) **SUPERGRAVITY VERTICAL VIBRATION TABLE**
VERTIKALER SUPERGRAVITATIONSSCHWINGTISCH
TABLE DE VIBRATION VERTICALE À SUPERGRAVITÉ

(30) Priority: 25.09.2020 CN 202011024011
(43) Date of publication of application: 06.07.2022
(73) Proprietor: Zhejiang University, Hangzhou, Zhejiang 310058 (CN)
(72) Inventor: ZHOU, Yanguo, Hangzhou, Zhejiang 310058 (CN); WANG, Yubing, Hangzhou, Zhejiang 310058 (CN); JIANG, Jianqun, Hangzhou, Zhejiang 310058 (CN); LIN, Weian, Hangzhou, Zhejiang 310058 (CN); LING, Daosheng, Hangzhou, Zhejiang 310058 (CN); CHEN, Yunmin, Hangzhou, Zhejiang 310058 (CN); XIE, Haibo, Zhejiang 310058 (CN)
(74) Representative: Bayramoglu et al.
(86) International application number: PCT/CN2021/110270
(87) International publication number: WO 2022/062673

(56) References cited:
- CN-A- 102 794 235
- CN-A- 104 502 210
- CN-A- 108 318 201
- CN-A- 111 441 081
- CN-A- 111 595 692
- CN-A- 112 284 659
- CN-B- 103 016 453
- CN-U- 204 439 479
- CN-U- 205 449 713
- CN-U- 207 730 415
- GB-A- 2 574 689
- JP-A- S59 155 603
- US-A1- 2006 248 955

## Description

### TECHNICAL FIELD

The present disclosure belongs to a vertical vibration device for physical model tests in the field of centrifuge hypergravity, and in particular, relates to a centrifugal hypergravity vertical vibration table.

### BACKGROUND

The seismic performance of geotechnical structures (high dams, high and steep slopes, weak foundations, subway stations, tunnels, underground utility tunnels, urban buildings, and nuclear power plants) is an important physical model test. In order to reduce earthquake damage and study the seismic performance of the geotechnical structures, a vibration table test is usually conducted using a vibration table. Specifically, a geotechnical structure model of a reduced size is placed on the vibration table, and then a certain vibration waveform is input to observe the earthquake response of the geotechnical structures under the working conditions to deduce the seismic performance of the real geotechnical structures. The vibration table tests are divided into two types: normal gravity vibration table tests and hypergravity vibration table tests, that is, 1 g vibration table tests and hypergravity centrifuge vibration table tests. 1 g represents normal gravity.

The 1 g vibration table has relatively large defects due to the focus on the area rather than the depth. The self-weight stress of the soil body is incorrect, so the response of the site under ground motion cannot be truly reflected, and the real seismic property of tunnels, nuclear power plants, and high dams are also not reflected. The normal gravity vibration table is usually a large vibration table (the table top of the vibration table is larger in size) and does not use a centrifuge.

The hypergravity centrifuge test is a kind of physical model test conducted by a centrifuge. The geotechnical model of a reduced size is placed in a high-speed rotating centrifuge, such that the model withstands the action greater than the acceleration of gravity to compensate the self-weight loss of the geotechnical structures caused by model scale. Based on the hypergravity field environment provided by the centrifuge, the vibration table model test can generate the same self-weight stress as the prototype, truly reflect the dynamic response of the prototype under natural conditions, and reproduce the deformation and damage mechanism of the geotechnical structures under the action of an earthquake. A vibration table mounted on a centrifuge can simulate the dynamic response of a large-scale site using the model-scale and time-scale effect of hypergravity. Studies on hypergravity dynamic experiments has pushed geotechnical earthquake engineering to a new peak. The advantages of the hypergravity centrifugal test are: the change of rock and soil stress with depth can be accurately simulated; the selection of soil, the design of stress history, and the controllable loading system can be realized; the cost and time are relatively low; and the deformation and damage mechanism can be observed in real time. At present, the amplification regularityof horizontal unidirectional shear waves in free sites, inclined sites and slopes has been obtained using a hypergravity unidirectional vibration table, as well as unidirectional horizontal earthquake disaster mechanism of geotechnical structures and sites such as dams, slopes, retaining walls, and pile foundations.

However, the current international vibration table under hypergravity only involves horizontal vibration, while the vertical vibration table is only involved under normal gravity. Significant multidirectional ground motions have been observed in major earthquakes in recent years. For example, in the 2008 Wenchuan earthquake, the ShifangBajiao station recorded significant multidirectional ground motions, and in the 2008 Iwate earthquake in Japan, the vertical acceleration component recorded by the IWTH25 surface station reached 3.8 g, far exceeding the peak value of the horizontal acceleration. The disaster effect caused by the multidirectional ground motion is very prominent: the Wenchuan earthquake produced severe projective landslides, the multidirectional vibration in the Kobe earthquake produced complex soil-structure interactions, resulting in the buckling failure of columns of the Daikai station, and in the Christchurch earthquake, the frequency of the vertical ground motion was close to the fundamental frequency of the site, causing a large amount of liquefaction in the site. The study on the evolution regularity of vertical ground motion and the disaster-causing effect of rock and soil has achieved remarkable results in both theoretical and numerical aspects, but it has not been verified in physical model tests.

Under normal gravity, the vertical vibration table only needs to balance the self-weight stress of the model itself in the normal gravity environment, and the vertical balance force that the vibration table needs to provide changes little in the vibration process, so the normal-gravity vertical vibration table can adopt the same driving method in the vertical direction as in the horizontal direction, and the hydraulic control and structural design of the normal-gravity vertical vibration table are relatively less difficult. However, the transition from a normal-gravity device to a hypergravity device creates the following problems:
(1) When the centrifuge is running, in the horizontal direction, the stress state of the movable mass in the reciprocating motion is exactly the same, so the output force of the hydraulic cylinder is symmetrical, and all of them are used to provide the acceleration of the movable mass.However, in the vertical direction, the movable mass is subjected to the centrifugal force of hypergravity, which is dozens of times its own weight, resulting in inconsistent stress condition of the movable mass in the reciprocating motion. If the same driving method is adopted in the vertical direction as the horizontal direction, the stress condition of the piston rod of the hydraulic cylinder is asymmetric and an additional output force for counteracting the centrifugal force needs to be provided. In order to counteract the centrifugal force generated by the centrifuge, the output force of the hydraulic cylinder needs to be greatly increased. When the oil supply pressure remains unchanged, the output force can only be increased by increasing the piston area of the hydraulic cylinder. The flow demand of the hydraulic cylinder is proportional to the piston area. A larger piston area indicates a larger required oil supply flow of the servo valve. The frequency response characteristic of the servo valve is negatively correlated with the flow characteristic, resulting in worse high-frequency performance of the system.
(2) The g value in the vertical direction of the model changes when the centrifuge turns or stops, and how to dynamically feedback and adjust the vertical balance force in different operating states of the centrifuge is also critical. In the direction away from the hanging basket, the movable mass moves by the thrust of the dynamic cylinder. In the return direction, the clamping force of a static cylinder ensures that the movable mass and a dynamic cylinder are not separated, and the movable mass can completely follow the motion of the piston of the dynamic cylinder. When the rotational speed of the centrifuge is relatively low, the centrifugal acceleration of the movable mass is small, and insufficient to provide the pressing force required for the return stroke, the table top will be separated from the hydraulic cylinder, and unable to follow its vibration, and the motion will fail. Two of three horizontal-vertical vibration tables that have been developed around the world have not taken hypergravity balance measures, which makes it difficult to achieve vertical ground motion loading. The other adopts the combined working mode of the static support cylinder and the dynamic vibration exciter, but due to the large dynamic stiffness of the support cylinder, the dynamic balance effect of hypergravity in the process of high frequency vibration is poor, and the effect of ground motion modelling control is not ideal. Hypergravity dynamic balance technology is the key technology for the modelling of hypergravity vertical ground motion in the process of high frequency vibration.

CN111595692 A and CN102794235 A are describing centrifugal hypergravity vibration tables.

### SUMMARY

In order to solve the problems existing in the background art, an objective of the present disclosure is to provide a vertical vibration table in a centrifugal hypergravity field to model the vertical earthquake ground motion.

The above objective of the present disclosure is achieved by a technical solution as follows:
A centrifugal hypergravity vertical vibration table includes a table base and a table top, a vertical electro-hydraulic servo vibration excitation system with preload, a table top guide system, and an accumulator that are disposed on the table base. The table top guide system includes a sleeve base, a table top guide shaft, and a table top guide shaft bearing. The table top guide shaft is fixedly disposed at a bottom of the table top. The table top guide shaft is sleeved on the sleeve base through the table top guide shaft bearing. A bottom of the sleeve base is fixed on the table base.

The accumulator may include an upward preloading accumulator, a downward preloading accumulator, a dynamic actuating cylinder oil return accumulator, and a dynamic actuating cylinder oil supply accumulator that are disposed on the table top.

The vertical electro-hydraulic servo vibration excitation system with preload may include a vertical dynamic servo actuator and a vertical static preloading actuator that are arranged up and down coaxially. The vertical dynamic servo actuator may include a dynamic actuator sleeve. The vertical static preloading actuator may include a static actuator sleeve. A lower end of the static actuator sleeve may be fixed to the table top. A lower end of the dynamic actuator sleeve may be fixedly sleeved on an upper end of the static actuator sleeve coaxially. An actuating rod may be disposed in both the static actuator sleeve and the dynamic actuator sleeve. An upper end of the actuating rod may abut against a center of a bottom surface of the table top.

Three flanges may be formed in an outer circumference of the actuating rod from top to bottom in an axial direction, and may be respectively an upper flange, a middle flange, and a lower flange from top to bottom. An outer circumference of the upper flange may be sealedly nested and connected in an inner wall of the dynamic actuator sleeve via an upper sealing ring. An outer circumference of the middle flange may be sealedly nested and connected in the inner wall of the dynamic actuator sleeve via an upper cavity sealing ring. An outer circumference of the lower flange may be sealedly nested and connected in an inner wall of the static actuator sleeve via a lower sealing ring. An inner flange may be formed in the static actuator sleeve between the middle flange and the lower flange. An inner wall of the inner flange and the outer circumference of the actuating rod may be sealedly nested and connected via an isolation sealing ring. A dynamic upper annular chamber may be formed between the outer circumference of the actuating rod between the upper flange and the middle flange and the inner wall of the dynamic actuator sleeve. A middle annular chamber may be formed between the outer circumference of the actuating rod between the middle flange and the lower flange and a nested portion of the inner walls of the dynamic actuator sleeve and the static actuator sleeve. The middle annular chamber may be divided into a dynamic lower annular chamber located at an upper part and a static upper annular chamber located at a lower part by the isolation sealing ring. A static lower circular chamber may be formed between the outer circumference of the actuating rod below the lower flange and the inner wall of the static actuator sleeve. The dynamic upper annular chamber and the dynamic lower annular chamber may be separately connected to a dynamic hydraulic servo valve through respective vertical actuating hydraulic interface channels of the dynamic upper annular chamber and the dynamic lower annular chamber, and the dynamic hydraulic servo valve may be connected to the dynamic actuating cylinder oil return accumulator and the dynamic actuating cylinder oil supply accumulator. The static upper annular chamber may be connected to an upper static servo valve through a downward preloading hydraulic interface channel, and the upper static servo valve may be connected to the downward preloading accumulator. The static lower circular chamber may be connected to a lower static servo valve through an upward preloading hydraulic interface channel, and the lower static servo valve may be connected to the upward preloading accumulator.

An actuating cylinder upper gasket may be disposed in an upper end face of the dynamic actuator sleeve.

Through control of the dynamic hydraulic servo valve, the dynamic upper annular chamber and the dynamic lower annular chamber may be adjusted to be fed and discharged from the dynamic actuating cylinder oil return accumulator and the dynamic actuating cylinder oil supply accumulator, such that oil pressure in the dynamic upper annular chamber and the dynamic lower annular chamber is applied to annular stepped surfaces on two sides of the middle flange to drive the actuating rod to act.

Through control of the dynamic hydraulic servo valve, the static upper annular chamber may be adjusted to be fed and discharged from the downward preloading accumulator, and the static lower circular chamber may be adjusted to be fed and discharged from the upward preloading accumulator, such that oil pressure in the static upper annular chamber and the static lower circular chamber is applied to annular stepped surfaces on two sides of the lower flange to drive the actuating rod to act.

Screw holes for connection with a bottom plate of a hanging basket of a hypergravity centrifuge may be formed in the table base, such that the table base is disposed in the hanging basket of the hypergravity centrifuge.

A hydrostatic support bearing may be disposed at an end of the actuating rod.

The upward preloading accumulator, the downward preloading accumulator, the dynamic actuating cylinder oil return accumulator, and the dynamic actuating cylinder oil supply accumulator may be disposed on the table top.

The accumulator may include three upward preloading accumulators, one downward preloading accumulator, one dynamic actuating cylinder oil return accumulator, and one dynamic actuating cylinder oil supply accumulator.

The centrifugal hypergravity vertical vibration table is used for vibration in a direction of a centrifugal force in a hypergravity centrifuge.

The present disclosure has the following beneficial effects.

The centrifugal hypergravity vertical vibration table of the present disclosure adopts the flexible dynamic balance technology to realize vertical vibration excitation in the hypergravity environment, can reproduce the site and foundation response and disaster effect under the action of vertical earthquake in the model scale, and provides an advanced experimental platform and basic condition support for the development of major scientific and technological tasks for earthquake prevention and disaster reduction, and the research, development and validation of new technologies for major projects.

The present disclosure separates the vertical electro-hydraulic servo vibration excitation system with preload into a static part and a dynamic part through flexible dynamic balance, such that the smallest actuator and servo valve can be used for vertical vibration excitation. The hypergravity is balanced by the vertical static preloading actuator, and the dynamic actuating cylinder realizes vertical vibration excitation, which greatly reduces the difficulty of vibration excitation in the hypergravity direction, ensures that the hydraulic servo valve is kept near its zero position at any rotational speed of the centrifuge, and improves the control accuracy of modelling vertical ground motion under centrifugal hypergravity.

The present disclosure adopts a downward preload pull-down scheme in which oil is directly supplied by the accumulator. When the rotational speed of the centrifuge is relatively low, the centrifugal acceleration of the movable mass is relatively small, and it is difficult to accurately balance the centrifugal force of the movable mass. The downward static preloading accumulator 11 directly applies oil pressure to the static lower circular chamber to provide a downward preload to ensure that the centrifugal force of the movable mass is balanced with the upward preload and the downward preload at any rotational speed of the centrifuge, such that the dynamic hydraulic servo valve is kept near the zero position. In addition, the vibration excitation system and the table top guide system are arranged symmetrically, and the accumulator is reasonably arranged according to the weight, such that the center of gravity is located in the middle of the vibration table to solve the eccentricity problem of the whole hanging basket after installing the vibration table and avoid additional bending moment to the rotating arm of the centrifuge.

### BRIEF DESCRIPTION OF THE DRAWINGS

FIG. 1 is a front schematic diagram of a centrifugal hypergravity vertical vibration table according to the present disclosure;
FIG. 2 is a side schematic diagram of the centrifugal hypergravity vertical vibration table according to the present disclosure;
FIG. 3 is a schematic plan view of the centrifugal hypergravity vertical vibration table according to the present disclosure;
FIG. 4 is a schematic diagram of a table top guide system of the centrifugal hypergravity vertical vibration table according to the present disclosure; and
FIG. 5 is a schematic diagram of a vertical electro-hydraulic servo vibration excitation system with preload of the centrifugal hypergravity vertical vibration table according to the present disclosure.

Reference numerals: 1-a table base, 2-a table top, 3-an accumulator, 4-a vertical electro-hydraulic servo vibration excitation system with preload, 5-a table top guide system, 6-a vertical dynamic servo actuator, 7-a vertical static preloading actuator, 9-an actuating rod, 10-an upward preloading accumulator, 11-a downward preloading accumulator, 12-a dynamic actuating cylinder oil return accumulator, 13-a dynamic actuating cylinder oil supply accumulator, 14-a table top guide shaft, 15-a table top guide shaft bearing, 16-a guide shaft lower gasket, 17-a dynamic hydraulic servo valve, 18-a vertical actuating hydraulic interface channel, 19-an upper sealing ring, 20-an upper cavity sealing ring, 21-an isolation sealing ring, 22-a lower sealing ring, 23-a lower static servo valve, 24-an upper flange, 25-a middle flange, 26-a lower flange, 27-a downward preloading hydraulic interface channel, 28-an upward preloading hydraulic interface channel, 29-an actuating cylinder upper gasket, 30-an upper static servo valve, 31-a dynamic annular chamber, 32-a static upper annular chamber, and 33-a static lower circular chamber.

### DETAILED DESCRIPTION OF THE EMBODIMENTS

The present disclosure is described in more detail hereinafter with reference to the accompanying drawings and specific embodiments.

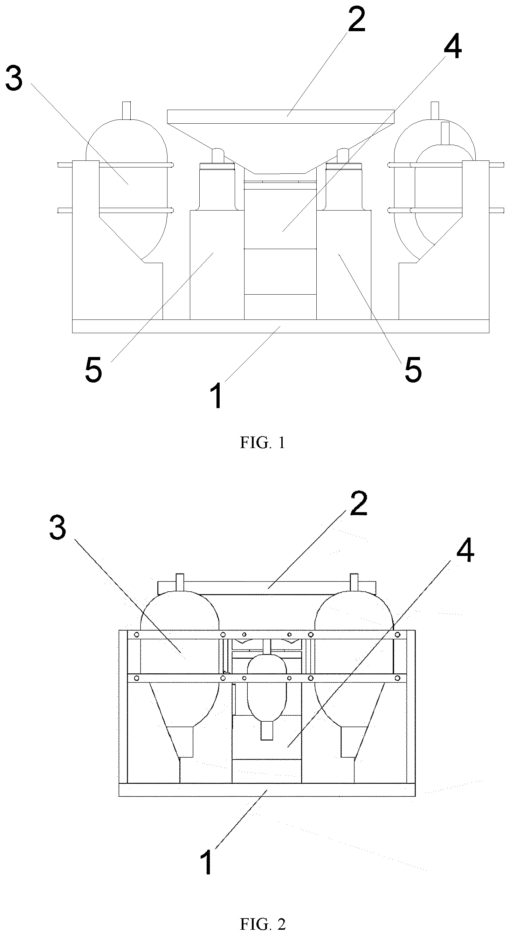

As shown in FIG. 1 and FIG. 2, a structure of specific implementations includes a table base and a table top, a vertical electro-hydraulic servo vibration excitation system with preload, a table top guide system, and an accumulator that are disposed on the table base. The table top has a flat top surface, is used to connect a test piece and the vibration excitation system, can reliably transmit an excitation force of the vibration table to the test piece, and is also suitable for the installation and fixation of a variety of different test pieces. In the specific implementation, screw holes for connection with a bottom plate of a hanging basket of a hypergravity centrifuge are formed in the table base, such that the table base is disposed in the hanging basket of the hypergravity centrifuge.

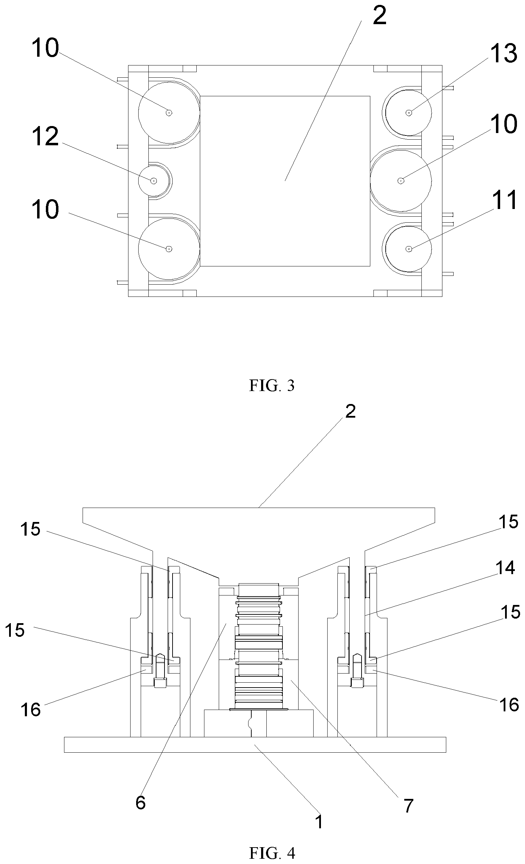

As shown in FIG. 4, the table top guide system is disposed between the table base and the table top, and is fixedly connected to the table base and the table top, and is mainly to balance the table top and guide the direction. The table top guide system includes a sleeve base, a table top guide shaft, a table top guide shaft bearing, and a guide shaft lower gasket. The vertically arranged table top guide shaft is fixedly disposed at four corners of a bottom of the table top. The table top guide shaft is sleeved on the sleeve base through the table top guide shaft bearing. A bottom of the sleeve base is fixed on the table base. The guide shaft lower gasket is connected between the table top guide shaft bearing and an inner bottom of the sleeve base for support.

The vibration excitation system and the table top guide system are arranged symmetrically, and the accumulator is reasonably arranged according to the weight, such that the center of gravity is located in the middle of the vibration table to solve the eccentricity problem of the whole hanging basket after installing the vibration table and avoid additional bending moment to the rotating arm of the centrifuge.

Preferably, the table top adopts a high-strength alloy welding structure, and the static stiffness of the table top is improved by optimizing the rib layout of the table top and the local rigidity of the connecting parts to achieve light weight and high stiffness of the table top, thereby reducing the load of the actuator and bearing large load force at the same time.

As shown in FIG. 3, the accumulator includes an upward preloading accumulator, a downward preloading accumulator, a dynamic actuating cylinder oil return accumulator, and a dynamic actuating cylinder oil supply accumulator that are disposed on the table top.

The upward preloading accumulator, the downward preloading accumulator, the dynamic actuating cylinder oil return accumulator, and the dynamic actuating cylinder oil supply accumulator are disposed on the table top.

The specific implementation of the accumulator includes three upward preloading accumulators, one downward preloading accumulator, one dynamic actuating cylinder oil return accumulator, and one dynamic actuating cylinder oil supply accumulator.

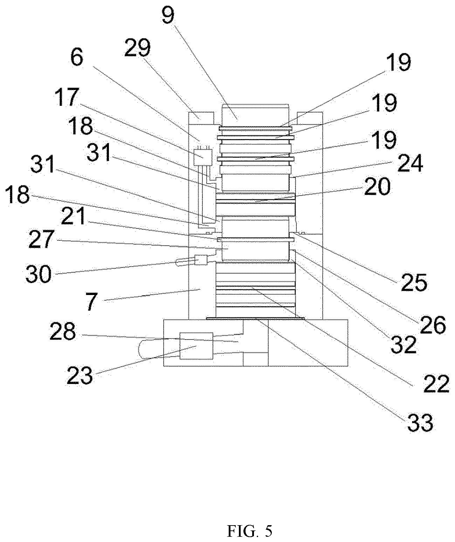

As shown in FIG. 5, the vertical electro-hydraulic servo vibration excitation system with preload includes a vertical dynamic servo actuator and a vertical static preloading actuator that are arranged up and down coaxially, and the two actuators share one set of rigid body and actuating rod. The vertical dynamic servo actuator includes a dynamic actuator sleeve. The vertical static preloading actuator includes a static actuator sleeve. A lower end of the static actuator sleeve is fixed to the table top. A lower end of the dynamic actuator sleeve is fixedly sleeved on an upper end of the static actuator sleeve coaxially. An actuating rod is disposed in both the static actuator sleeve and the dynamic actuator sleeve. A hydrostatic support bearing is disposed at an end of the actuating rod. An upper part of the actuating rod is nested in the dynamic actuator sleeve, and a lower part of the actuating rod is nested in the static actuator sleeve. An upper end of the actuating rod abuts against a center of a bottom surface of the table top.

Three flanges arranged at intervals are formed in an outer circumference of the actuating rod from top to bottom in an axial direction, and are respectively an upper flange, a middle flange, and a lower flange from top to bottom. An outer circumference of the upper flange is sealedly nested and connected in an inner wall of the dynamic actuator sleeve via an upper sealing ring. An outer circumference of the middle flange is sealedly nested and connected in the inner wall of the dynamic actuator sleeve via an upper cavity sealing ring. An outer circumference of the lower flange is sealedly nested and connected in an inner wall of the static actuator sleeve via a lower sealing ring. An inner flange is formed in the static actuator sleeve between the middle flange and the lower flange. An inner wall of the inner flange and the outer circumference of the actuating rod are sealedly nested and connected via an isolation sealing ring. An annular gap is formed between the outer circumference of the actuating rod between the upper flange and the middle flange and the inner wall of the dynamic actuator sleeve to form a dynamic upper annular chamber. An annular gap is formed between the outer circumference of the actuating rod between the middle flange and the lower flange and a nested portion of the inner walls of the dynamic actuator sleeve and the static actuator sleeve to form a middle annular chamber. The middle annular chamber is divided into a dynamic lower annular chamber located at an upper part and a static upper annular chamber located at a lower part by the flexible isolation sealing ring. An annular gap is formed between the outer circumference of the actuating rod below the lower flange and the inner wall of the static actuator sleeve to form a static lower circular chamber. The dynamic upper annular chamber and the dynamic lower annular chamber are separately connected to a dynamic hydraulic servo valve through respective vertical actuating hydraulic interface channels of the dynamic upper annular chamber and the dynamic lower annular chamber formed inside the dynamic actuator sleeve, and the dynamic hydraulic servo valve is connected to the dynamic actuating cylinder oil return accumulator and the dynamic actuating cylinder oil supply accumulator. The static upper annular chamber is connected to an upper static servo valve through a downward preloading hydraulic interface channel formed inside the static actuator sleeve, and the upper static servo valve is connected to the downward preloading accumulator. The static lower circular chamber is connected to a lower static servo valve through an upward preloading hydraulic interface channel formed inside the static actuator sleeve, and the lower static servo valve is connected to the upward preloading accumulator.

The vertical dynamic servo actuator is used for high frequency dynamic actuation, and the vertical static preloading actuator is used for static and large load-bearing actuation.

An actuating cylinder upper gasket is disposed in an upper end face of the dynamic actuator sleeve, and is used to assist in buffering and bearing the force between the upper end of the actuating rod and the bottom surface of the table top.

In the specific implementation, both the upper flange and the lower flange are provided with outwardly convex flanges as piston rings to increase the effective piston area of the actuating rod.

The oil of the vertical static preloading actuator is provided by the accumulator. The downward preloading hydraulic interface channel and the upward preloading hydraulic interface channel are respectively connected to the upward preloading accumulator and the downward preloading accumulator through an external hose for the servo valve. The vertical actuating hydraulic interface channel is connected to the dynamic actuating cylinder oil return accumulator and the dynamic actuating cylinder oil supply accumulator through the hose for the dynamic hydraulic servo valve. The dynamic hydraulic servo valve controls the motion of the vertical dynamic actuating cylinder through controlling the flow to the actuator.

The hydraulic oil supply of the vertical static preloading actuator is connected to a plurality of large-capacity upward preloading accumulators. The capacity of the upward preloading accumulator is greater than that of the downward preloading accumulator, dynamic actuating cylinder oil return accumulator, and the dynamic actuating cylinder oil supply accumulator to allow free flow with minimal pressure loss during dynamic motion of the actuating rod.

The static pressure between the vertical static preloading actuator and the accumulator is regulated by a servo valve. In the acceleration process of the centrifuge, the control program collects the centrifugal acceleration from the tachometer, calculates the corresponding control voltage, and sends it to the servo valve through the digital-to-analog conversion module to control the pressure of the static cylinder to control the output force of the cylinder.

The dynamic force of the bidirectional up and down vibration of the actuating rod is generated by the pressure difference between the annular stepped surfaces on upper and lower sides of the flange. The servo valve controls the motion of the vertical dynamic actuating cylinder by controlling the flow to the actuator.

The dynamic hydraulic servo valve is a flow distribution control valve. Through control of the dynamic hydraulic servo valve, the dynamic upper annular chamber and the dynamic lower annular chamber are uniformly adjusted to be fed and discharged from the dynamic actuating cylinder oil return accumulator and the dynamic actuating cylinder oil supply accumulator, such that oil pressure in the dynamic upper annular chamber and the dynamic lower annular chamber is applied to annular stepped surfaces on two sides of the middle flange to drive the actuating rod to act.

Through control of the dynamic hydraulic servo valve, the static upper annular chamber is adjusted to be fed and discharged from the downward preloading accumulator, and the static lower circular chamber is adjusted to be fed and discharged from the upward preloading accumulator, such that oil pressure in the static upper annular chamber and the static lower circular chamber is applied to annular stepped surfaces on two sides of the lower flange to drive the actuating rod to act.

Specifically, if the oil pressure in the dynamic upper annular chamber is greater than the oil pressure in the dynamic lower annular chamber, the middle flange is driven to move downward through the transmission by the annular stepped surfaces on two sides of the middle flange, otherwise, the middle flange is driven to move upward.

If the oil pressure in the static upper annular chamber is greater than the oil pressure in the static lower circular chamber, the lower flange is driven to move downward through the transmission by the annular stepped surfaces on two sides of the lower flange, otherwise, the lower flange is driven to move upward.

The oil pressure acting on the steps of the middle flange and the lower flange is combined to drive the actuating rod to act upward or downward as a whole, realizing the vibration actuation balance under hypergravity, improving the stability, and preventing failure.

The vibration excitation method of the hypergravity field vertical vibration table of the present disclosure is specifically as follows.

Static preload and a dynamic drive system are separated. Before the operation of the hypergravity centrifuge, through the control of the lower static servo valve 23, the upward preloading hydraulic interface channel of the vertical static preloading actuator is driven to apply constant oil pressure to the static lower circular chamber to generate an upward preload to lift up the table top and maintain it. Accordingly, through the upper static servo valve 30, corresponding oil pressure is applied to the static upper annular chamber through the downward preloading hydraulic interface channel 27 to generate a downward preload to apply the downward pressure force to the table top to maintain the balance.

The dynamic system is realized under static preload. When the hypergravity centrifuge starts to operate, with the continuous increase of centrifugal acceleration, the hypergravity of the table top gradually increases, the downward preload gradually decreases, and the upward preload increases in proportion to the centrifugal force acting on the movable mass. Due to the large area of the acting rod that provides the upward preload and the large capacity of the accumulator, its accuracy is affected, especially when the rotational speed of the centrifuge is relatively low, the centrifugal acceleration of the movable mass is small, and it is difficult to accurately balance the centrifugal force of the movable mass. The downward static preloading accumulator 11 is used to directly apply oil pressure to the static lower circular chamber to provide a downward preload and ensure that the centrifugal force of the movable mass is balanced with the upward preload and the downward preload at any rotational speed of the centrifuge, such that the dynamic hydraulic servo valve is kept near the zero position.

When the hypergravity centrifuge reaches the target speed, the dynamic actuating cylinder oil return accumulator 12 and the dynamic actuating cylinder oil supply accumulator 13 are controlled by the dynamic hydraulic servo valve 17 to apply dynamic oil pressure to the dynamic annular chamber through the vertical actuating hydraulic interface channel 18 to generate vertical vibration excitation for modelling the ground motion. Since the piston displacement of the vertical dynamic servo actuator is generally only 5 mm at the maximum, while the upward preloading hydraulic interface channel is connected by a large-diameter oil tube to a large-capacity accumulator, the oil pressure fluctuation of the static annular chamber is very small, and the force provided by the vertical static preloading actuator remains basically unchanged.

In this way, the static preload and the dynamic drive system are separated, and the vertical dynamic servo actuator does not need to balance the centrifugal force of the movable mass, such that the flow rate of the dynamic hydraulic servo valve is small, which ensures the frequency response characteristics of the servo valve and can realize high frequency vibration excitation.

Therefore, in this way, the present disclosure can greatly reduce the vibration loading difficulty in the centrifugal hypergravity direction, and secure the control accuracy of modelling vertical ground motion under centrifugal hypergravity.

## Claims

1. A centrifugal hypergravity vertical vibration table, comprising a table base (1) and a table top (2), a vertical electro-hydraulic servo vibration excitation system (4) with preload, a table top guide system (5), and an accumulator (3) that are disposed on the table base (1), wherein the table top guide system (5) comprises a sleeve base, a table top guide shaft (14), and a table top guide shaft bearing (15); the table top guide shaft (14) is fixedly disposed at a bottom of the table top (2), the table top guide shaft (14) is sleeved on the sleeve base through the table top guide shaft bearing (15), and a bottom of the sleeve base is fixed on the table base (1) **characterized in that**:
the accumulator (3) comprises an upward preloading accumulator (10), a downward preloading accumulator (11), a dynamic actuating cylinder oil return accumulator (12), and a dynamic actuating cylinder oil supply accumulator (13) that are disposed on the table top (2);
the vertical electro-hydraulic servo vibration excitation system (4) with preload comprises a vertical dynamic servo actuator (6) and a vertical static preloading actuator (7) that are arranged up and down coaxially, the vertical dynamic servo actuator (6) comprises a dynamic actuator sleeve, the vertical static preloading actuator (7) comprises a static actuator sleeve, a lower end of the static actuator sleeve is fixed to the table top (2), a lower end of the dynamic actuator sleeve is fixedly sleeved on an upper end of the static actuator sleeve coaxially, an actuating rod (9) is disposed in both the static actuator sleeve and the dynamic actuator sleeve, and an upper end of the actuating rod (9) abuts against a center of a bottom surface of the table top (2); and
three flanges are formed in an outer circumference of the actuating rod (9) from top to bottom in an axial direction, and are respectively an upper flange (24), a middle flange (25), and a lower flange (26) from top to bottom, an outer circumference of the upper flange (24) is sealedly nested and connected in an inner wall of the dynamic actuator sleeve via an upper sealing ring (19), an outer circumference of the middle flange (25) is sealedly nested and connected in the inner wall of the dynamic actuator sleeve via an upper cavity sealing ring (20), an outer circumference of the lower flange (26) is sealedly nested and connected in an inner wall of the static actuator sleeve via a lower sealing ring (22), an inner flange is formed in the static actuator sleeve between the middle flange (25) and the lower flange (26), and an inner wall of the inner flange and the outer circumference of the actuating rod (9) are sealedly nested and connected via an isolation sealing ring (21); a dynamic upper annular chamber is formed between the outer circumference of the actuating rod (9) between the upper flange (24) and the middle flange (25) and the inner wall of the dynamic actuator sleeve, a middle annular chamber is formed between the outer circumference of the actuating rod (9) between the middle flange (25) and the lower flange (26) and a nested portion of the inner walls of the dynamic actuator sleeve and the static actuator sleeve, the middle annular chamber is divided into a dynamic lower annular chamber located at an upper part and a static upper annular chamber located at a lower part by the isolation sealing ring (21), and a static lower circular chamber is formed between the outer circumference of the actuating rod (9) below the lower flange (26) and the inner wall of the static actuator sleeve; the dynamic upper annular chamber and the dynamic lower annular chamber are separately connected to a dynamic hydraulic servo valve (17) through respective vertical actuating hydraulic interface channels (18) of the dynamic upper annular chamber and the dynamic lower annular chamber, and the dynamic hydraulic servo valve (17) is connected to the dynamic actuating cylinder oil return accumulator (12) and the dynamic actuating cylinder oil supply accumulator (13); the static upper annular chamber is connected to an upper static servo valve (30) through a downward preloading hydraulic interface channel (27), and the upper static servo valve (30) is connected to the downward preloading accumulator (11); and the static lower circular chamber is connected to a lower static servo valve (23) through an upward preloading hydraulic interface channel (28), and the lower static servo valve (23) is connected to the upward preloading accumulator (10).

2. The centrifugal hypergravity vertical vibration table according to claim 1, wherein
an actuating cylinder upper gasket (29) is disposed in an upper end face of the dynamic actuator sleeve.

3. The centrifugal hypergravity vertical vibration table according to claim 1, wherein
through control of the dynamic hydraulic servo valve (17), the dynamic upper annular chamber and the dynamic lower annular chamber are adjusted to be fed and discharged from the dynamic actuating cylinder oil return accumulator (12) and the dynamic actuating cylinder oil supply accumulator (13), such that oil pressure in the dynamic upper annular chamber and the dynamic lower annular chamber is applied to annular stepped surfaces on two sides of the middle flange (25) to drive the actuating rod (9) to act; and
through control of the dynamic hydraulic servo valve (17), the static upper annular chamber is adjusted to be fed and discharged from the downward preloading accumulator (11), and the static lower circular chamber is adjusted to be fed and discharged from the upward preloading accumulator (10), such that oil pressure in the static upper annular chamber and the static lower circular chamber is applied to annular stepped surfaces on two sides of the lower flange (26) to drive the actuating rod (9) to act.

4. The centrifugal hypergravity vertical vibration table according to claim 1, wherein
screw holes for connection with a bottom plate of a hanging basket of a hypergravity centrifuge are formed in the table base (1), such that the table base (1) is disposed in the hanging basket of the hypergravity centrifuge.

5. The centrifugal hypergravity vertical vibration table according to claim 1, wherein
a hydrostatic support bearing is disposed at an end of the actuating rod (9).

6. The centrifugal hypergravity vertical vibration table according to claim 1, wherein
the accumulator (3) comprises three upward preloading accumulators (10), one downward preloading accumulator (11), one dynamic actuating cylinder oil return accumulator (12), and one dynamic actuating cylinder oil supply accumulator (13).

7. A use of a centrifugal hypergravity vertical vibration table according to claim 1, wherein the centrifugal hypergravity vertical vibration table is used for vibration in a direction of a centrifugal force in a hypergravity centrifuge.

## Patentansprüche

1. Zentrifugalhyperschwerkraft-Vertikalschwingungstisch, der einen Tischsockel (1) und eine Tischplatte (2), ein vertikales elektrohydraulisches Servo-Schwingungserregungssystem (4) mit Vorspannung, ein Tischplatte-Führungssystem (5) und einen Speicher (3), die auf dem Tischsockel (1) angeordnet sind, aufweist, wobei das Tischplatte-Führungssystem (5) einen Hülsenboden, eine Tischplatte-Führungswelle (14) und ein Tischplatte-Führungswellenlager (15) aufweist; wobei die Tischplatte-Führungswelle (14) fixiert an einer Unterseite der Tischplatte (2) angeordnet ist, die Tischplatte-Führungswelle (14) auf dem Hülsenboden durch das Tischplatte-Führungswellenlager (15) mit einer Hülse versehen ist und eine Unterseite des Hülsenbodens auf dem Tischsockel (1) fixiert ist, **dadurch gekennzeichnet, dass**:
der Speicher (3) einen Aufwärtsvorspannung-Speicher (10), einen Abwärtsvorspannung-Speicher (11), einen Dynamischer-Betätigungszylinder-Ölrücklaufspeicher (12) und einen Dynamischer-Betätigungszylinder-Ölversorgungsspeicher (13) umfasst, die auf der Tischplatte (2) angeordnet sind;
das vertikale elektrohydraulische Servo-Schwingungserregungssystem (4) mit Vorspannung ein vertikales dynamisches Servo-Betätigungsglied (6) und ein vertikales statisches Vorspannungs-Betätigungsglied (7) aufweist, die koaxial oben und unten angeordnet sind, das vertikale dynamische Servo-Betätigungsglied (6) eine Dynamisches-Betätigungsglied-Hülse aufweist, das vertikale statische Vorspannungs-Betätigungsglied (7) eine Statisches-Betätigungsglied-Hülse aufweist, ein unteres Ende der Statisches-Betätigungsglied-Hülse an der Tischplatte (2) fixiert ist, ein unteres Ende der Dynamisches-Betätigungsglied-Hülse koaxial an einem oberen Ende der Statisches-Betätigungsglied-Hülse fixiert mit einer Hülse versehen ist, eine Betätigungsstange (9) sowohl in der Statisches-Betätigungsglied-Hülse als auch der Dynamisches-Betätigungsglied-Hülse angeordnet ist und ein oberes Ende der Betätigungsstange (9) an einer Mitte einer unteren Fläche der Tischplatte (2) anliegt; und
drei Flansche in einem Außenumfang der Betätigungsstange (9) in Axialrichtung von oben nach unten ausgebildet sind, welche von oben nach unten ein oberer Flansch (24), ein mittlerer Flansch (25) bzw. ein unterer Flansch (26) sind, wobei ein Außenumfang des oberen Flansches (24) über einen oberen Dichtring (19) dicht in einer Innenwand der Dynamisches-Betätigungsglied-Hülse eingebettet und verbunden ist, ein Außenumfang des mittleren Flansches (25) über einen oberen Hohlraum-Dichtring (20) dicht in der Innenwand der Dynamisches-Betätigungsglied-Hülse eingebettet und verbunden ist, ein Außenumfang des unteren Flansches (26) über einen unteren Dichtring (22) dicht in einer Innenwand der Statisches-Betätigungsglied-Hülse eingebettet und verbunden ist, ein innerer Flansch in der Statisches-Betätigungsglied-Hülse zwischen dem mittleren Flansch (25) und dem unteren Flansch (26) ausgebildet ist und eine Innenwand des inneren Flansches und der Außenumfang der Betätigungsstange (9) über einen Isolationsdichtring (21) dicht eingebettet und verbunden sind; wobei eine dynamische obere ringförmige Kammer zwischen dem Außenumfang der Betätigungsstange (9) zwischen dem oberen Flansch (24) und dem mittleren Flansch (25) und der Innenwand der Dynamisches-Betätigungsglied-Hülse ausgebildet ist, eine mittlere ringförmige Kammer zwischen dem Außenumfang der Betätigungsstange (9) zwischen dem mittleren Flansch (25) und dem unteren Flansch (26) und einem eingebetteten Abschnitt der Innenwände der Dynamisches-Betätigungsglied-Hülse und der Statisches-Betätigungsglied-Hülse ausgebildet ist, die mittlere ringförmige Kammer durch den Isolationsdichtring (21) in eine dynamische untere ringförmige Kammer, die sich an einem oberen Teil befindet, und eine statische obere ringförmige Kammer, die sich an einem unteren Teil befindet, aufgeteilt ist und eine statische untere kreisförmige Kammer zwischen dem Außenumfang der Betätigungsstange (9) unterhalb des unteren Flansches (26) und der Innenwand der Statisches-Betätigungsglied-Hülse ausgebildet ist; wobei die dynamische obere ringförmige Kammer und die dynamische untere ringförmige Kammer über jeweilige Vertikalbetätigung-Hydraulikschnittstellenkanäle (18) der dynamischen oberen ringförmigen Kammer und der dynamischen unteren ringförmigen Kammer getrennt mit einem dynamischen Hydraulikservoventil (17) verbunden sind und das dynamische Hydraulikservoventil (17) mit dem Dynamischer-Betätigungszylinder-Ölrücklaufspeicher (12) und dem Dynamischer-Betätigungszylinder-Ölversorgungsspeicher (13) verbunden ist; wobei die statische obere ringförmige Kammer über einen Abwärtsvorspannung-Hydraulikschnittstellenkanal (27) mit einem oberen statischen Servoventil (30) verbunden ist und das obere statische Servoventil (30) mit dem Abwärtsvorspannung-Speicher (11) verbunden ist; und wobei die statische untere kreisförmige Kammer über einen Aufwärtsvorspannung-Hydraulikschnittstellenkanal (28) mit einem unteren statischen Servoventil (23) verbunden ist und das untere statische Servoventil (23) mit dem Aufwärtsvorspannung-Speicher (10) verbunden ist.

2. Zentrifugalhyperschwerkraft-Vertikalschwingungstisch nach Anspruch 1, wobei
eine obere Betätigungszylinderdichtung (29) an einer oberen Endfläche der Dynamisches-Betätigungsglied-Hülse angeordnet ist.

3. Zentrifugalhyperschwerkraft-Vertikalschwingungstisch nach Anspruch 1, wobei
durch Steuerung des dynamischen Hydraulikservoventils (17) die dynamische obere ringförmige Kammer und die dynamische untere ringförmige Kammer dazu angepasst werden, von dem Dynamischer-Betätigungszylinder-Ölrücklaufspeicher (12) und dem Dynamischer-Betätigungszylinder-Ölversorgungsspeicher (13) derart gespeist und entleert zu werden, dass Öldruck in der dynamischen oberen ringförmigen Kammer und der dynamischen unteren ringförmigen Kammer auf ringförmige gestufte Oberflächen auf zwei Seiten des mittleren Flansches (25) ausgeübt wird, um die Betätigungsstange (9) zur Betätigung zu treiben; und
durch Steuerung des dynamischen Hydraulikservoventils (17) die statische obere ringförmige Kammer dazu angepasst wird, von dem Abwärtsvorspannung-Speicher (11) gespeist und entleert zu werden, und die statische untere kreisförmige Kammer dazu angepasst wird, von dem Aufwärtsvorspannung-Speicher (10) gespeist und entleert zu werden, sodass Öldruck in der statischen oberen ringförmigen Kammer und der statischen unteren kreisförmigen Kammer auf ringförmige gestufte Oberflächen auf zwei Seiten des unteren Flansches (26) ausgeübt wird, um die Betätigungsstange (9) zur Betätigung zu treiben.

4. Zentrifugalhyperschwerkraft-Vertikalschwingungstisch nach Anspruch 1, wobei
Schraubenlöcher zur Verbindung mit einer Bodenplatte eines Hängekorbs einer Hyperschwerkraftzentrifuge derart in dem Tischsockel (1) ausgebildet sind, dass der Tischsockel (1) in dem Hängekorb der Hyperschwerkraftzentrifuge angeordnet ist.

5. Zentrifugalhyperschwerkraft-Vertikalschwingungstisch nach Anspruch 1, wobei
ein hydrostatisches Stützlager an einem Ende der Betätigungsstange (9) angeordnet ist.

6. Zentrifugalhyperschwerkraft-Vertikalschwingungstisch nach Anspruch 1, wobei
der Speicher (3) drei Aufwärtsvorspannung-Speicher (10), einen Abwärtsvorspannung-Speicher (11), einen Dynamischer-Betätigungszylinder-Ölrücklaufspeicher (12) und einen Dynamischer-Betätigungszylinder-Ölversorgungsspeicher (13) umfasst.

7. Verwendung eines Zentrifugalhyperschwerkraft-Vertikalschwingungstisches nach Anspruch 1, wobei der Zentrifugalhyperschwerkraft-Vertikalschwingungstisch zur Schwingung in Richtung einer Zentrifugalkraft in einer Hyperschwerkraftzentrifuge verwendet wird.

## Revendications

1. Une table vibrante verticale à centrifuge à hypergravité, comprenant une base de table (1) et un dessus de table (2), un système d'excitation de vibrations à asservissement électrohydraulique vertical (4) avec précharge, un système de guidage de dessus de table (5), et un accumulateur (3) qui sont agencés sur la base de table (1), dans lequel le système de guidage de dessus de table (5) comprend une base de manchon, un arbre de guidage de dessus de table (14), et un palier d'arbre de guidage de dessus de table (15) ; l'arbre de guidage de dessus de table (14) est fixement agencé à la partie inférieure du dessus de table (2), l'arbre de guidage de dessus de table (14) est emmanché sur la base de manchon via le palier d'arbre de guidage de dessus de table (15), et la partie inférieure de la base de manchon est fixée sur la base de table (1) **caractérisé en ce que** :
l'accumulateur (3) comprend un accumulateur de précharge vers le haut (10), un accumulateur de précharge vers le bas (11), un accumulateur de retour d'huile de vérin dynamique (12), et un accumulateur d'alimentation en huile de vérin dynamique (13) qui sont agencés sur le dessus de table (2) ;
le système d'excitation de vibrations à asservissement électrohydraulique vertical (4) avec précharge comprend un servo-vérin dynamique vertical (6) et un vérin de précharge statique vertical (7) qui sont agencés en haut et en bas coaxialement, le servo-vérin dynamique vertical (6) comprend un manchon de vérin dynamique, le vérin de précharge statique vertical (7) comprend un manchon de vérin statique, une extrémité inférieure du manchon de vérin statique est fixée sur le dessus de table (2), une extrémité inférieure du manchon de vérin dynamique est fixement emmanchée sur une extrémité supérieure du manchon de vérin statique coaxialement, une tige de vérin (9) est agencée à la fois dans le manchon de vérin statique et dans le manchon de vérin dynamique, et une extrémité supérieure de la tige de vérin (9) vient en butée contre le centre de la surface de la partie inférieure du dessus de table (2) ; et
trois brides sont formées sur une circonférence externe de la tige de vérin (9) du haut vers le bas dans le sens axial, et sont respectivement une bride supérieure (24), une bride intermédiaire (25), et une bride inférieure (26) du haut vers le bas, une circonférence externe de la bride supérieure (24) est hermétiquement logée et raccordée dans une paroi interne du manchon de vérin dynamique via une bague d'étanchéité supérieure (19), une circonférence externe de la bride intermédiaire (25) est hermétiquement logée et raccordée dans la paroi interne du manchon de vérin dynamique via une bague d'étanchéité de cavité supérieure (20), une circonférence externe de la bride inférieure (26) est hermétiquement logée et raccordée dans une paroi interne du manchon de vérin statique via une bague d'étanchéité inférieure (22), une bride interne est formée dans le manchon de vérin statique entre la bride intermédiaire (25) et la bride inférieure (26), et une paroi interne de la bride interne et la circonférence externe de la tige de vérin (9) sont hermétiquement logées et raccordées via une bague d'étanchéité d'isolation (21) ; une chambre annulaire dynamique supérieure est formée entre la circonférence externe de la tige de vérin (9) entre la bride supérieure (24) et la bride intermédiaire (25) et la paroi interne du manchon de vérin dynamique, une chambre annulaire intermédiaire est formée entre la circonférence externe de la tige de vérin (9) entre la bride intermédiaire (25) et la bride inférieure (26) et une portion logée des parois internes du manchon de vérin dynamique et du manchon de vérin statique, la chambre annulaire intermédiaire est divisée en une chambre annulaire inférieure dynamique située à une partie supérieure et une chambre annulaire supérieure statique située à une partie inférieure de la bague d'étanchéité d'isolation (21), et une chambre circulaire inférieure statique est formée entre la circonférence externe de la tige de vérin (9) en dessous de la bride inférieure (26) et de la paroi interne du manchon de vérin statique ; la chambre annulaire supérieure dynamique et la chambre annulaire inférieure dynamique sont séparément raccordées à une servo-vanne hydraulique dynamique (17) via les canaux d'interface hydraulique de vérin verticaux (18) respectifs de la chambre annulaire supérieure dynamique et de la chambre annulaire inférieure dynamique, et une servo-vanne hydraulique dynamique (17) est raccordée à l'accumulateur de retour d'huile de vérin dynamique (12) et à l'accumulateur d'alimentation en huile de vérin dynamique (13) ; la chambre annulaire supérieure statique est raccordée à une servo-vanne statique supérieure (30) via un canal d'interface hydraulique de précharge vers le bas (27), et la servo-vanne statique supérieure (30) est raccordée à l'accumulateur de précharge vers le bas (11) ; et la chambre circulaire inférieure statique est raccordée à une servo-vanne statique inférieure (23) via un canal d'interface hydraulique de précharge par le haut (28), et la servo-vanne statique inférieure (23) est raccordée à l'accumulateur de précharge vers le haut (10).

2. Une table vibrante verticale à centrifuge à hypergravité selon la revendication 1, dans laquelle une garniture supérieure de vérin (29) est agencée sur la face d'extrémité supérieure du manchon de vérin dynamique.

3. Une table vibrante verticale à centrifuge à hypergravité selon la revendication 1, dans laquelle
via la commande de la servo-vanne hydraulique dynamique (17), la chambre annulaire supérieure dynamique et la chambre annulaire inférieure dynamique sont ajustées pour être alimentées et déchargées depuis l'accumulateur de retour d'huile de vérin dynamique (12) et l'accumulateur d'alimentation en huile de vérin dynamique (13), de sorte que la pression d'huile dans la chambre annulaire supérieure dynamique et la chambre annulaire inférieure dynamique est appliquée aux surfaces étagées annulaires sur les deux côtés de la bride intermédiaire (25) pour entraîner l'action de la tige de vérin (9) ; et
via la commande de la servo-vanne hydraulique dynamique (17), la chambre annulaire supérieure statique est ajustée pour être alimentée et déchargée depuis l'accumulateur de précharge vers le bas (11), et la chambre circulaire inférieure dynamique est ajustée pour être alimentée et déchargée depuis l'accumulateur de précharge vers le haut (10), de sorte que la pression d'huile dans la chambre annulaire supérieure statique et la chambre circulaire inférieure statique est appliquée à la surfaces étagée annulaire sur les deux côtés de la bride inférieure (26) pour entraîner l'action de la tige de vérin (9).

4. Une table vibrante verticale à centrifuge à hypergravité selon la revendication 1, dans laquelle
des trous de vis de raccordement à la plaque de fond d'un panier suspendu d'une centrifuge à hypergravité sont formés sur la base de table (1), de sorte que la base de table (1) est agencée dans le panier suspendu de la centrifuge à hypergravité.

5. Une table vibrante verticale à centrifuge à hypergravité selon la revendication 1, dans laquelle un palier de support hydrostatique est agencé à une extrémité de la tige de vérin (9).

6. Une table vibrante verticale à centrifuge à hypergravité selon la revendication 1, dans laquelle
l'accumulateur (3) comprend trois accumulateurs à précharge vers le haut (10),un accumulateur à précharge vers le bas (11), un accumulateur de retour d'huile de vérin dynamique (12), et un accumulateur d'alimentation en huile de vérin dynamique (13).

7. Une table vibrante verticale à centrifuge à hypergravité selon la revendication 1, dans laquelle la table vibrante verticale à centrifuge à hypergravité est utilisée pour les vibrations dans une direction de la force centrifuge d'une centrifuge à hypergravité.
